(19) **Europäisches Patentamt / European Patent Office / Office européen des brevets**

(11) **EP 1 953 701 B1**

(12) **EUROPEAN PATENT SPECIFICATION**

(45) Date of publication and mention
of the grant of the patent:
**16.06.2010 Bulletin 2010/24**

(51) Int Cl.:
*G06T 15/00* *(2006.01)*    *G06T 15/70* *(2006.01)*

(21) Application number: **08250417.6**

(22) Date of filing: **05.02.2008**

(54) **Hybrid volume rendering in computer implemented animation**

Hybride Volumendarstellung in einer computerimplementierten Animation

Rendu de volume hybride dans une animation mise en oeuvre par ordinateur

(84) Designated Contracting States:
**DE FR GB**

(30) Priority: **05.02.2007 US 899676 P**
**08.02.2007 US 900570 P**

(43) Date of publication of application:
**06.08.2008 Bulletin 2008/32**

(73) Proprietor: **Pacific Data Images LLC**
**Redwood City, California 94063 (US)**

(72) Inventors:
• **Gibbs, Jonathan**
**Belmont, California 94002 (US)**
• **Dinerstein, Jonathan**
**Draper, Utah 84020 (US)**

(74) Representative: **Smith, Samuel Leonard**
**J.A. Kemp & Co.**
**14 South Square**
**Gray's Inn**
**London WC1R 5JJ (GB)**

(56) References cited:
**EP-A- 1 550 984**

• **MUELLER KLAUS ET AL: "Fast perspective volume rendering with splatting by utilizing a ray-driven approach" PROC. OF THE IEEE VISUALIZATION CONF. 1996 IEEE, LOS ALAMITOS, CA, USA, 1996, pages 65-72, XP002478717**

• **REEVES WILLIAM T: "PARTICLE SYSTEMS - TECHNIQUE FOR MODELING A CLASS OF FUZZY OBJECTS" ACM TRANSACTIONS ON GRAPHICS, ASSOCIATION FOR COMPUTING MACHINERY, NEW YORK, NY, US, vol. 2, no. 2, April 1983 (1983-04), pages 91-108, XP002427042 ISSN: 0730-0301**

• **MUELLER K ET AL: "SPLATTING ERRORS AND ANTIALIASING" IEEE TRANSACTIONS ON VISUALIZATION AND COMPUTER GRAPHICS, IEEE SERVICE CENTER, LOS ALAMITOS, CA, US, vol. 4, no. 2, 1 April 1998 (1998-04-01), pages 178-191, XP000765493 ISSN: 1077-2626**

• **KYUNGHA MIN ED - GEORGE BEBIS ET AL: "An Efficient Photon Mapping Algorithm for Rendering Light-Emitting Fluids" ADVANCES IN VISUAL COMPUTING LECTURE NOTES IN COMPUTER SCIENCE;;LNCS, SPRINGER BERLIN HEIDELBERG, BE, vol. 4291, 2006, pages 850-859, XP019050719 ISBN: 978-3-540-48628-2**

• **LEVOY M: "Display of surfaces from volume data" IEEE COMPUTER GRAPHICS AND APPLICATIONS, IEEE SERVICE CENTER, NEW YORK, NY, US, vol. 8, no. 3, 1 May 1998 (1998-05-01), pages 29-37, XP002312196 ISSN: 0272-1716**

• **WESTOVER L: "Footprint evaluation for volume rendering" SIGGRAPH 1990. 17TH ANNUAL ACM CONFERENCE ON COMPUTER GRAPHICS AND INTERACTIVE TECHNIQUES 6-10 AUG. 1990 DALLAS, TX, USA, vol. 24, no. 4, August 1990 (1990-08), pages 367-376, XP002478811**

**Description**

This invention generally relates to computer graphics and animation such as used in films, videos, and games, and which is typically computer implemented, and more specifically to the problem in animation of volume rendering, that is depicting volumetric effects.

Volume rendering is a technique used to display a two dimensional projection of a three-dimensional discretely sampled data set, in computer graphics. Usually the data is acquired in a regular pattern, with each volume picture element (voxel) represented by a single value. One must define a camera location in space relative to the volume. A direct volume renderer requires every data sample to be mapped to opacity and a color. Known rendering techniques include ray casting, splatting, shear warp, and texture mapping.

Volumetric effects (e.g., dust, fire, etc) are common in computer-implemented animation. These effects typically employ a physical or procedural simulator (to generate the effect) and a volume renderer. Volume rendering is also useful in medical imaging, where 3D scans of biological tissue are common. The two most popular computer-based approaches to volume rendering are splatting and ray marching. In splatting, the color and opacity of the volume is computed at discrete points. This can be done by sampling a voxel grid (optionally with interpolation), or by directly using particles as the volume representation. Every volume element is "splatted" on to the viewing surface in back to front order. These points are then typically rendered as overlapping circles (disks) with Gaussian falloff of opacity at their edges. Rendering hardware (processors) may be used to accelerate splatting.

Particle systems for modelling fuzzy objects were described in "Particle systems - A Technique for modelling a class of fuzzy objects" by William T. Reeves, Acm Transactions on graphics, Vol. 2, No. 2, pp. 91-108 April 1983. Developments in particle rendering and splatting with motion blur are described in EP-A2-1550984 and "Splatting errors and Antialiasing" by K. Mueller et al., IEEE Trans. on visualisation and computer graphics Vol. 4, N.2, pp. 178-191 1998.

In ray marching, rays are cast through the image plane into the volume. Opacity and color are then calculated at discrete locations along each ray and summed into the associated pixel (picture element). In ray casting, the image is projected by casting (light) rays through the volume. The ray starts at the center of the projection of the camera and passes through the image pixel on the imaginary image plane in between the camera and the volume to be rendered. The ray is sampled at regular intervals throughout the volume. Ray marching can be slow, but many optimization schemes have been developed, including faster grid interpolation and skipping of empty space.

The article "Fast Perspective Volume Rendering with splatting by utilizing a Ray-Driven Approach", by K. Mueller et al. Proc. IEEE Visualisation Conf. 1996, pp 65-72, discloses a method in accordance with the pre-characterizing portions of the independent claims.

The present invention provides a method of depicting a volumetric effect as defined in claim 1 and a corresponding computer program and apparatus.

In accordance with this invention, a combination of splatting and ray marching is used, in order to employ the strength of each for computer implemented animation for games, video, feature films, medical imaging, etc. This is perhaps up to an order of magnitude faster in terms of computer processing than is conventional ray marching with motion blur, with results of comparable quality. Ray marching typically samples the volume to be depicted in a pixel-ray-based manner. Thus the sample density corresponds to camera proximity. Ray marching focuses on the volume detail closest to the camera and thus captures the most important detail. In contrast, splatting uses a regular or stochastic sampling of the entire volume. Ray marching often produces higher quality renders and may be faster if splatting densely samples the volume.

In accordance with an example of the method, the voxel grid is ray marched with a particle generated for each sample. The particles are then rendered by splatting. For each pixel, a single ray is cast from the camera location through the center of that pixel. Next, one marches along that ray from one point to another point in space. A particle is generated at each step along the ray. This is done using interpolation. That is, for instance 8 equally spaced point values are typically interpolated at a minimum (tri-linear) interpolation or as many as 64 point values for tri-cubic interpolation (see below). The particles represent contributions to individual pixels. Each particle is rendered as a pixel-size square or using a splat primitive such as a Gaussian disk. The particles can either be rendered one at a time as they are generated during ray marching or alternatively can be rendered in a batch. Motion blur is rendered by splatting the particle multiple times over the velocity vector. The method may further comprise setting a depth of field of the image.

This process has generally been found to be very useful for depicting volumetric visual effects such as fire, dust and smoke. The image quality provided is very high.

Typically this process is carried out via computer software (code) executed on a conventional computer such as a workstation type computer as used in the computer animation field. This process thereby is embodied in a computer program. Coding such a computer program in light of this disclosure would be routine. Any suitable programming language may be used. Some aspects of the process may be embodied in computer hardware.

"Voxel" is a combination of the words volumetric and pixel and is well known in the animation field as referring to a volume element representing a value on a regular grid in 3-dimensional space. It is analogous to a pixel which represents 2-dimensional image data. In the computer animation field, rendering is a process of generating an image from a model by means of computer programs. The models are descriptions of 3-dimensional objects in a defined language or data structure. A model typically contains geometry, viewpoint, texture, lighting and shading information. The image is typically a digital image or raster graphics image. Rendering is typically the last major step in assembling an animation film or video, giving the final appearance to the models and animation. It is used, for instance, in video games, simulators, movie and television special effects.

Thus the present method is directed to a combination of two popular volume rendering schemes. This is appealing because existing knowledge of and systems for volume rendering can be leveraged in implementing and utilizing this technique. The method can be implemented employing a conventional ray marcher and particle renderer. The method executes quickly while producing high-quality images. Ray-based sampling requires fewer samples than traditional splatting for high-quality rendering because ray marching focuses on the nearest (and likely most important) detail. The present method generates and splats particles because it has empirically proven to be a very fast and effective mechanism for motion blur and depth of field. (Depth of field refers to the focus of objects in a scene at various depths.) A single ray per pixel is sufficient, due to the use of motion blur and particles with diameter greater than one pixel.

Strengths of the present method include generality, fast rendering, high image quality, accurate 3D motion blur, depth of field, ease of implementation, adaptive volume sampling density according to camera proximity since rays disperse, and the option to utilize rendering "hardware" (a special purpose computer graphics card) for splatting. The method can also be applied to volumetric effects that are represented by particles rather than a voxel grid.

FIGs. 1 a and 1b show a comparison of voxel grid sampling, showing in FIG. 1a splatting and in FIG. 1b ray marching. As shown, the sampling is uniform or stochastic in the splatting, whereas the ray marching samples along diverging rays.

FIG. 2a shows how a particle, currently at position p with velocity v, moves towards position p' in the next frame, and FIG. 2b shows motion blur is rendered by splatting the particle multiple times over the velocity vector, where the total opacity equals the opacity of the original particle.

FIGs. 3a and 3b show fire rendered with conventional ray marching (and no motion blur), and FIGs. 3c and 3d show fire rendered through the present method, complete with fast 3D motion blur.

FIGs. 4a and 4b show large-scale fire effects with volumetric smoke.

FIG. 5 shows volumetric clouds.

FIGs. 6a and 6b show a torch.

FIGS. 7 and 8 show images rendered using the present method.

FIG. 9 shows an apparatus for carrying out the present method.

DETAILED DESCRIPTION

Splatting and ray marching, as known in the field, have contrasting strengths and weaknesses, as summarized here:

| | *Strengths* | *Weaknesses* |
|---|---|---|
| *Splatting* | Fast motion blur. | Lower quality rendering. |
| | Fast rendering. | |
| *Ray marching* | Proximity-based sampling. | Slow motion blur. |
| | High quality rendering. | |

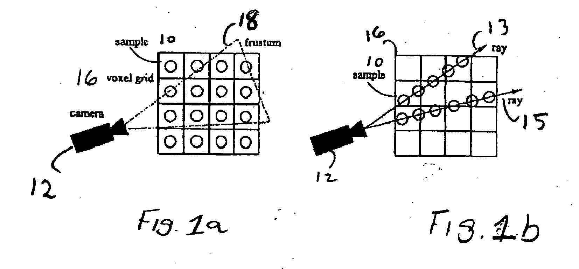

Ray marching samples the volume in a pixel-ray-based manner (see FIG. 1b). Thus the sample 10 density corresponds to camera 12 proximity defined by rays 13, 15. Ray marching naturally focuses on the volume detail that is the closest to the camera and thus likely the most important detail. In contrast, splatting (see FIG. 1a) utilizes a regular or stochastic sampling of the entire volume. The voxel grid 16 (in two dimensions) is shown, the camera observing frustum 18 for splatting. As a result, ray marching often produces higher-quality renders, and may be faster if splatting densely samples the volume. However, splatting is very fast if the volume is sparsely sampled but is then prone to lack of detail and noise.

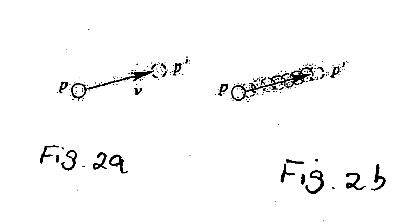

Another distinction between these volume rendering methods is motion blur. Note that providing motion blur is challenging in volume rendering, because correct blur requires that the velocity within the volume be taken into account. For example, a stationary volume may internally represent a turbulent fluid. This motion will only be blurred if internal velocity is considered. Fortunately it is simple to achieve accurate 3D motion blur in splatting (see FIGs. 2a, 2b). This is done by associating with each particle p the velocity v at that point inside the volume then draw each particle multiple times per animation frame (see FIG. 2b), distributed along its velocity vector v defined by p, p-. In contrast, motion blur with ray marching is notoriously slow to compute (using rays distributed through time) and thus rarely done. This is unfortunate because motion blur is an important component of temporal antialiasing. Many volumetric effects have high velocity (e.g., fire) and thus undesirable strobing can result if no blur is present. Given the contrasting strengths and weaknesses of existing techniques, volume rendering has often seemed a "black art". The present volume rendering method combines ray marching and splatting, leveraging the strengths of each.

This disclosure is directed to such a hybrid volume rendering method combining ray marching and splatting, retaining many of their unique strengths. The method includes:

1. The voxel grid is ray marched, with a particle generated for each sample.
2. The particles are rendered through splatting.

In the ray marching, for each pixel P, a single ray R is cast from the (notional) camera position C through the center of the pixel where R.o is the ray origin and R.d is the ray direction:

$$R.\vec{o} = C.position, \quad R.\vec{d} = unit(P.center - C.position), \quad R(t) = R.\vec{o} + R.\vec{d} \cdot t, \tag{1}$$

where t is a parameter along the ray. This ray is intersected with the voxel grid bounding box to determine the entry and exit points, at locations $t_0$ and $t_1$ respectively. To simplify intersection and marching, one applies the inverse grid transformation to the ray.

Next one marches along the ray from to to $t_1$. Specifically, increment $t = t + \Delta t$ where $\Delta t$ is a constant that may be set by the user. One can set $\Delta t$ such that about 150 steps (increments) are taken along rays that directly penetrate the volume.

A particle is generated at each step along the ray. The particle inherits the interpolated attributes (position, color, opacity, and velocity) of the voxel grid defined at that exact point R(t) in the voxel grid. One may utilize a choice of fast tri-linear (linear in dimensions X, Y, Z), tri-quadratic, or tri-cubic interpolation between voxels. The interpolation order is selected by the user (animator) per grid attributes. While non-linear interpolation is notably more computationally expensive than simple linear interpolation, higher order interpolation helps achieve sufficient visual quality for feature film production. This is especially true of velocity since it controls motion blur.

The present non-linear interpolation is based on the unique quadratic/cubic polynomial that interpolates three or four equally-spaced values. The polynomial equation may be derived through matrix inversion. The quadratic and cubic equations are reasonably simple and fast to execute on a computer processor. As an example, a quadratic interpolation f is:

$$f(p) = d[0] + p * ((2 - p) * d[1] - ((3 - d[2]) * d[0] + (1 - p) * d[2]) * 0.5) \tag{2}$$

where p is the position of the particle and d[ ] is the equally-spaced data to interpolate. The interpolation is executed in three passes, in dimensions xyz order for those 3 dimensions in space. Thus this equation is evaluated 13 times for each grid attribute to interpolate: 9 times in x, 3 times in y, and 1 time in z.

Nearly all computer processing time in the present method is spent in interpolation since particle splatting is so fast computationally. To minimize grid sampling, one can use two simple optimizations. First, precompute those voxel neighborhoods that have (nearly) zero opacity and skip over them. Second, terminate the ray if full opacity has been reached. The present method provides high-quality renders with only one ray per pixel, which helps keep the number of grid samples down.

In splatting, the particles represent contributions to individual pixels. As such, it is possible to render them by merely adding them to the associated pixels. However, this simple method may not be sufficient since the particles will move to non-pixel-center locations during motion blur. However, the method does not need elaborate splatting (e.g., Gaussian disks).

Each particle is rendered as a pixel-sized square or rectangle. Its contribution to a given pixel is modulated by the fraction of the pixel the particle covers. This weight w is easy to compute by this equation:

$$w(l, p) = \max(1 - \text{abs}(l.x - p.x)) * \max(1 - \text{abs}(l.y - p.y)), \tag{3}$$

where p is the position of the particle and 1 the center of the pixel, and assuming the pixel extends over a unit range in dimensions x and y. Alternatively, particle rendering can be performed on conventional rendering hardware (processors) using simple primitives. Note that particle diameter can be increased to achieve fast and easy noise filtering such as Gaussian disks.

The particles can either be rendered one at a time as they are generated during ray marching, or alternatively can be rendered in batch. Immediate rendering is preferable as less computer memory is utilized. However, ordered rendering (e.g., back-to-front) is useful in some circumstances and requires batch rendering. Fortunately, the particles are very "light" (requiring little memory) - one example successfully uses up to 35 million particles per frame. The order of particles along each ray can be utilized to speed up sorting.

Motion blur is rendered by splatting the particle multiple times over the velocity vector, where the total opacity equals the opacity of the original particle (see FIGS. 2a, 2b). This is achieved by projecting the velocity vector into the image plane. If the particles are being rendered in an ordered fashion, the order is assumed to remain consistent while blurring.

Illumination of hazy volume media is difficult to compute since incoming light is attenuated by partially opaque regions of the volume. Self-shadowing may be computed by shooting shadow rays and integrating attenuation, but this is slow to process. There is a known technique known as "light volume" for reusing illumination calculations. Specifically, illumination is computed for the center point of each voxel. Illumination at an arbitrary point in the volume is then approximated through interpolation. This can speed up rendering when multiple samples are taken per voxel.

However, light volumes have limitations. First, there is no speed/quality tradeoff that can be adjusted by the animator since the illumination information is always the same resolution as the voxel grid. Second, there may be no clear way to store in memory the light volume for certain volume representations, such as spheres filled with noise (a pseudorandom pattern which gives the appearance of a natural texture. An example of such noise is called "Perlin Noise" in the field.). Third, the illumination of every voxel is computed before rendering. This is computationally wasteful since portions of the volume may not be rendered due to 0 opacity or lying outside the camera frustum.

Although not claimed in the appended claims, the present approach can utilize a modified form of the light volume technique. The present approach provides a speed/quality tradeoff adjustable by the animator that works with any volume representation and only computes lighting in necessary regions of the volume.

This is done by decoupling the light volume from the voxel grid. Specifically one creates a distinct voxel grid (herein after referred to as the "light grid") whose resolution is specified by the animator. Upon creation, the light grid is aligned and oriented with the volume data bounding box. (A bounding box is a representation of the extent of the volume.) In other words, the light grid precisely fits the volume data whatever the volume data representation may be. The light grid is initialized in order to contain no illumination information. One also allocates an array of binary flags (indicators), one flag per voxel, which denote whether illumination in the voxel's entire neighborhood has been computed. (The neighborhood is defined by the surrounding points used for the interpolation. For a tri-linear interpolation it is the 8 points defining the voxel edges.) This is useful for quickly determining if light voxels need to be illuminated. The neighboring block is the same width as the grid interpolation filter which is the mechanism of the interpolation used to define the volume attributes at any point in space. The grid illumination is computed and stored on demand. Then illumination at the sample point p is quickly approximated through grid interpolation.

In feature film production, any given frame is rendered many times during the animation process. Thus it is useful to provide animators with software tools that provide both fast/lower quality renders and slow/high quality renders, in other words a tradeoff between speed and quality. The choice of light grid resolution provides the animator with a simple approach to adjust speed/quality. The animator may also be provided with a choice of tri-linear, tri-quadratic and tri-cubic interpolation for the light grid, as explained above. The calculation of light grid illumination on demand speeds up rendering overall since there is no wasted computation.

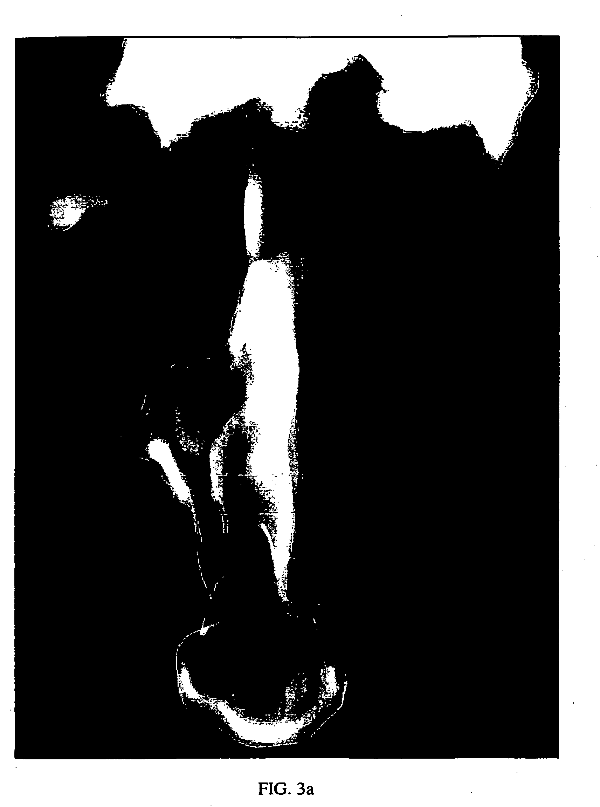

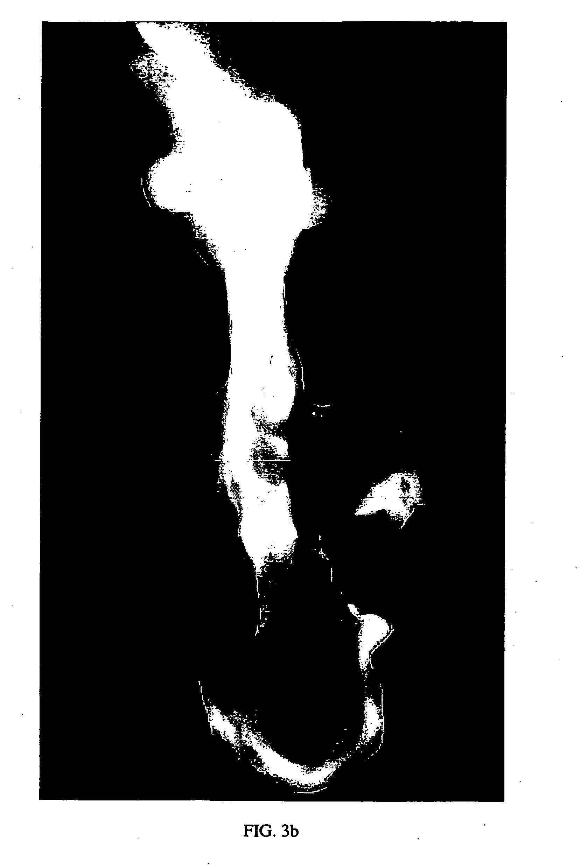

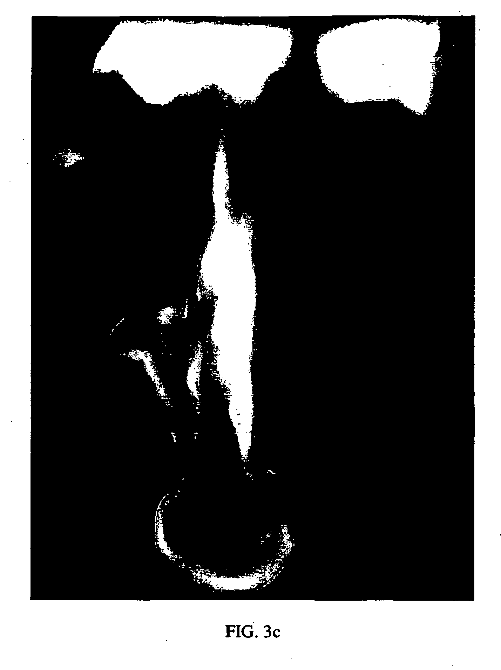

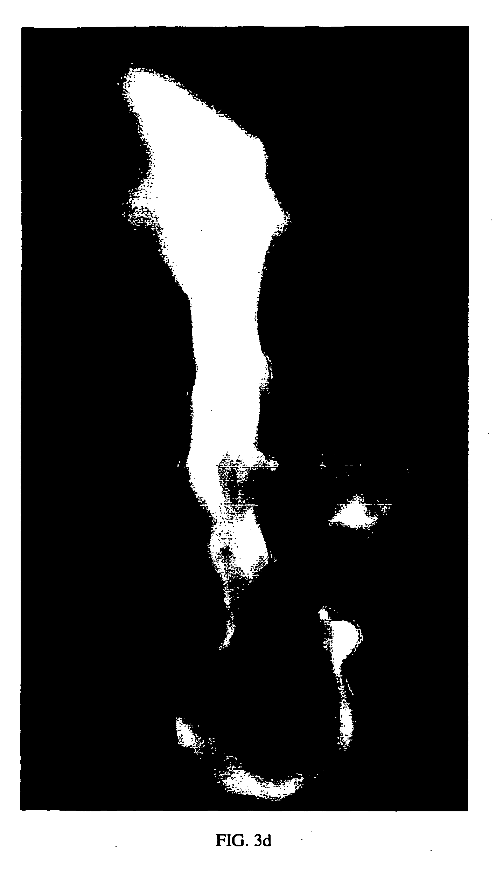

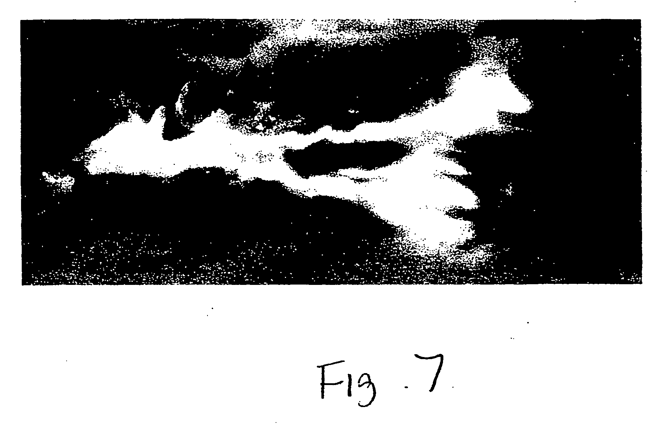

The present methods can be used for volumetric visual effects in feature animated films. These effects include fire, dust, and smoke, Examples of such effects are shown in FIGs. 3-8. Either a conventional Navier-Stokes fluid simulator (software module) or a conventional procedural system was used conventionally to generate each illustrated image. The procedural system writes volume data files to computer memory to be accessed by the renderer. Typically there is one volume file per animated frame.

As can be seen in these examples, the image quality is very high. All of these exemplary images were rendered with only one ray per pixel, and approximately 150 samples (increments) per ray. This technique is very fast - on a 3 GHz speed computer processor, rendering an HDTV (high definition television)-resolution image of motion-blurred fire takes approximately one minute per frame of the image. Also, the technique utilizes little computer memory if the particles are rendered when they are generated rather than being buffered and rendered in batch.

The importance and effectiveness of motion blur is demonstrated in FIGs. 3a, 3b, 3c and 3d. The two images without motion blur in FIGs. 3a and 3b undesirably appear very synthetic, more like a lava lamp than actual fire. In contrast, the two motion blurred images in FIGs. 3c and 3d appear significantly more realistic.

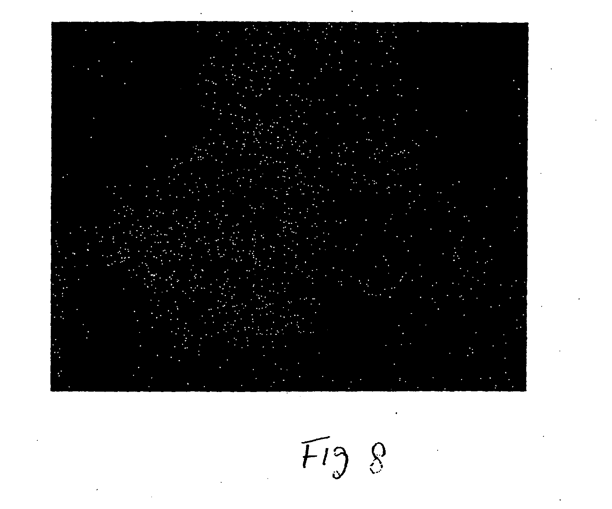

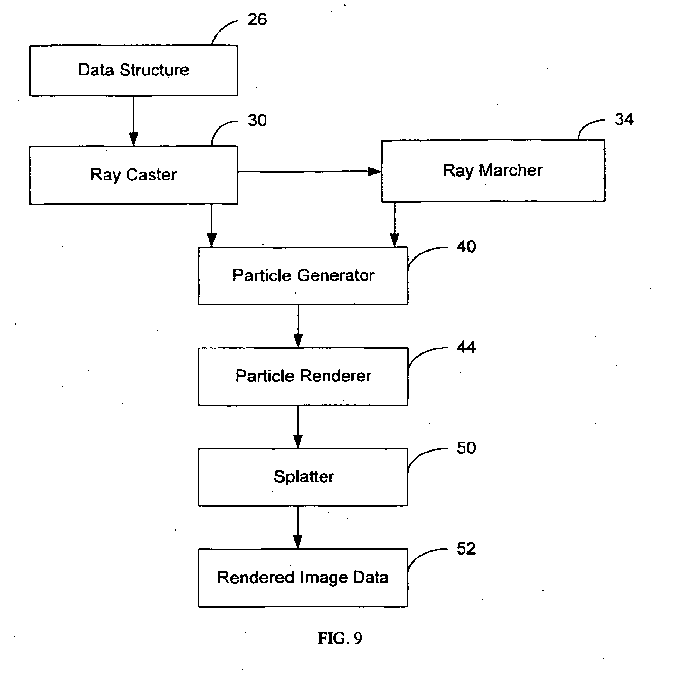

In one example, one uses a default light grid size of $175^3$ which requires approximately 61.3 MB of memory. This memory requirement is further reduced if the volume is rectangular (not cubic), such as 100 x 174 x 100. This relatively small size has empirically been determined to be effective for producing renders virtually indistinguishable from renders produced using exhaustive shadow rays. Exemplary images produced using this technique are shown in FIG. 8, showing a visual effect rendered with the present method and in FIG. 9 similarly a volumetric cloud with self-shadowing.

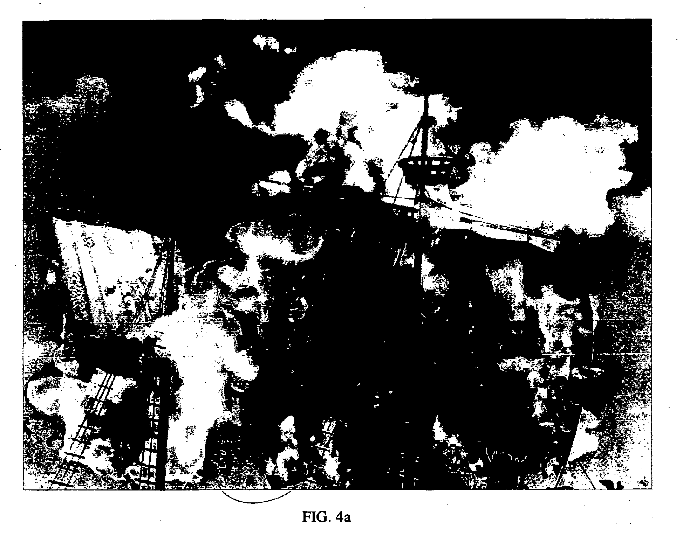

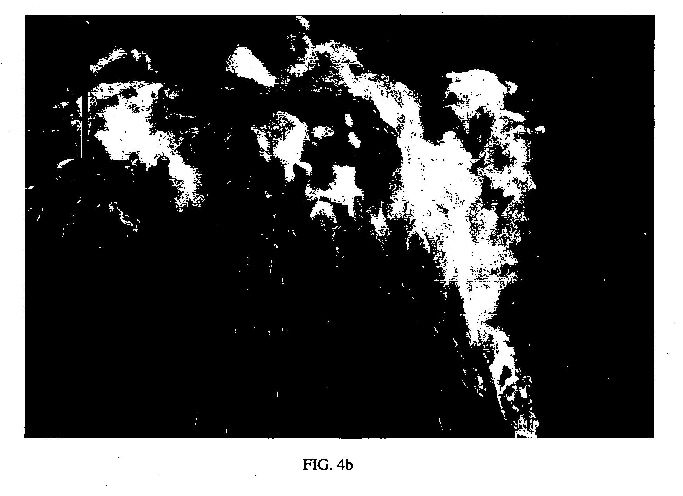

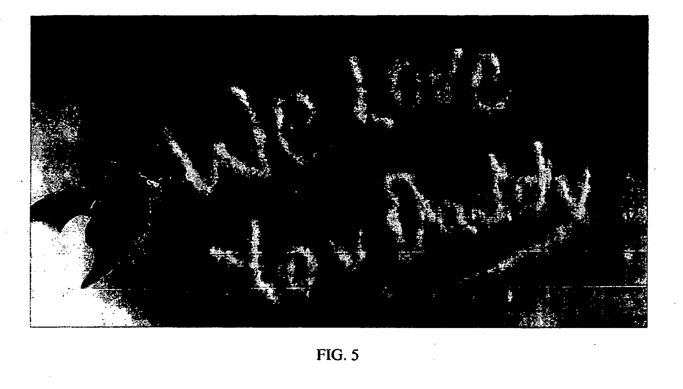

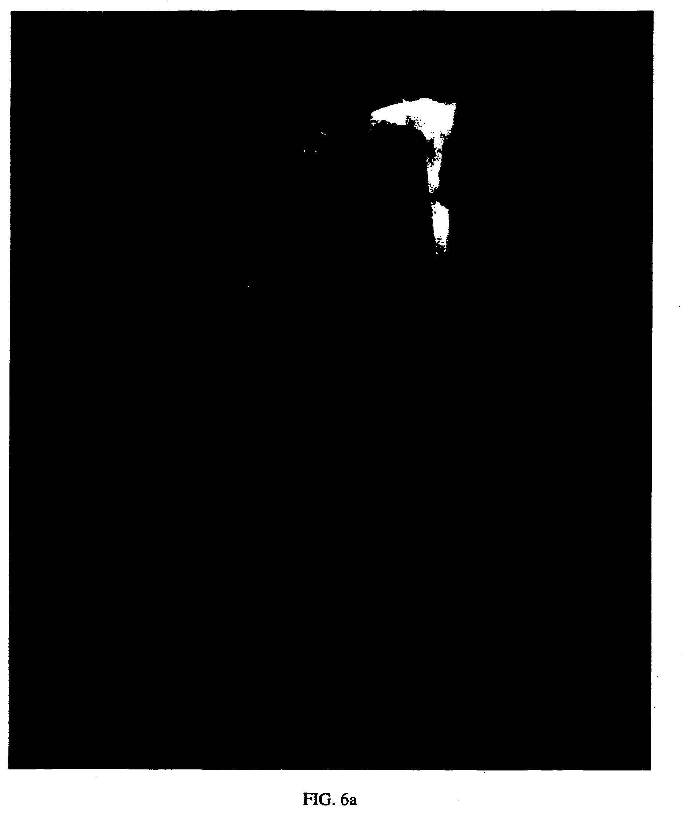

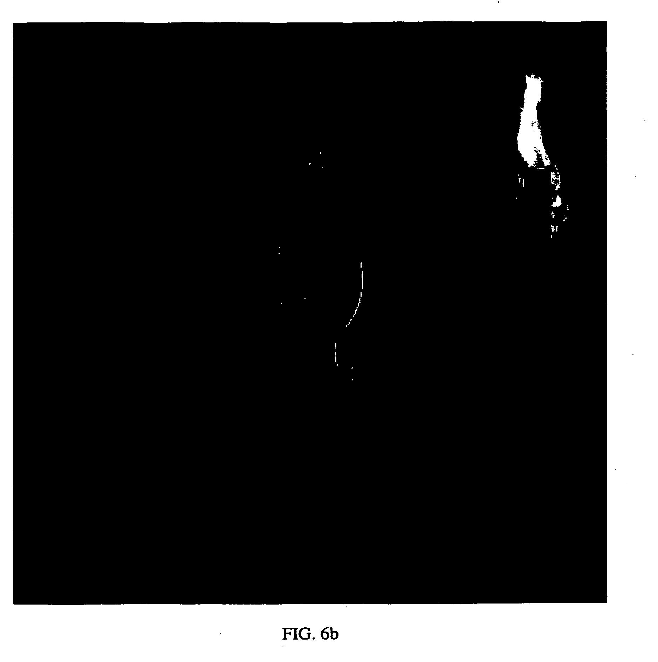

Further examples show the effectiveness of the present method for a wide variety of volumetric media. For example, it depicts highly transparent and incandescent fluids such as fire, and thick smoke with self-shadowing. Thus FIGs. 4a and 4b show two examples of large scale fire effects with volumetric smoke using the present method. FIG. 5 shows volumetric clouds. FIGs. 6a and 6b show two examples of a torch.

There is a visual limitation of the motion blur produced by this technique. This is very slightly visible in FIGs. 3c and 3d. In a region of the volume where motion vectors diverge, the associated particles diverge when rendering motion blur through splatting. As a result, the motion blur can undesirably appear hair-like. However, in practice, this artifact only appears in extreme conditions, and is minimal.

FIG. 9 shows an apparatus in the form of a computer program partitioned into elements to carry out the present method. Note that the depiction of FIG. 9 is merely illustrative; other variations are also within the scope of the invention. In FIG. 9, data structure 26 (to be stored in a suitable computer memory) defines a plurality of pixels which represent the image to be depicted. A ray caster element or code module 30 performs the ray casting. Next, a ray marcher element or code module 34 does the ray marching, at the predefined increments. The particle generator element or code module 40 generates the particles for each ray at each increment. The particles are then rendered by particle renderer element or code module 44. The splatter element or code module 50 then splats the particles and the resulting rendered image data 52 is stored in memory. Note that the designations and organization of these elements are only illustrative, and further some of the elements, or portions of them, may conventionally be embodied in hardware such as a dedicated processor and/or logic, rather than in software.

This disclosure is illustrative and not limiting; further modifications will be apparent to one skilled in the art in light of this disclosure and are intended to fall within the scope of the appended claims.

## Claims

1. A method for depicting a volumetric effect occupying a volume, comprising the steps of:

   providing a plurality of picture elements to define an image of the volumetric effect;
   for each picture element casting a ray (13, 15) from an observation location (12) through each picture element;
   moving through the volume along each ray (13, 15) in increments; and
   rendering the volumetric effect at each increment;

   **characterized in that** said rendering comprises:

   at each increment along the ray (13, 15), generating a particle; and
   splatting each particle on the image plane multiple times along a direction defined by a velocity of the particle in the image plane to define the image of the volumetric effect.

2. The method of Claim 1, wherein the step of generating a particle includes interpolating.

3. The method of Claim 2, wherein the interpolating is non-linear.

4. The method of Claim 2 wherein the interpolating includes applying one of a tri-linear, tri-quadratic, and tri-cubic interpolation.

5. The method of any preceding Claim, wherein the rendering of the particles is individually or in batches.

6. The method of any preceding Claim, wherein each particle is rendered on a quadrilateral the size of one of the picture elements.

7.  The method of any preceding Claim, wherein each particle has the attributes of position, color, opacity, and velocity.

8.  The method of any preceding Claim, wherein the observation location (12) is that of a notional camera recording the image.

9.  The method of any preceding Claim, wherein the step of casting the ray (13, 15) includes for each ray:

    determining its entry and exit point for the volume; and
    applying an inverse transformation to the ray (13, 15).

10. The method of any preceding Claim, wherein the number of increments for each ray (13, 15) is in the range of 50 to 450.

11. The method of any preceding Claim, wherein the step of splatting includes:

    weighting each particle by a proportion of the associated pixel covered by the splatted particle.

12. The method of any preceding Claim, wherein the step of splatting includes projecting a vector representing the velocity of the particle onto the image plane thereby to render motion blur.

13. The method of any preceding Claim, further comprising repeating the step of splatting over a vector defined by the velocity of the particle to provide motion blur.

14. The method of any preceding Claim, further comprising setting a depth of field of the image.

15. The method of any preceding claim being a computer-implemented method.

16. A computer program comprising program code means for performing all the steps of any one of the claims 1 to 15 when said program is run on a computer.

17. An apparatus, preferably computer-implemented, for depicting a volumetric effect occupying a volume, comprising:

    a memory for storing a plurality of picture elements defining an image;
    a ray caster (30) coupled to the memory and for casting a ray (13, 15) for each picture element from an observation location (12) through each picture element;
    a ray marcher (34) coupled to the ray caster (30) and for moving through the volume along each ray (13, 15) in increments; and
    a renderer (44) for rendering the volumetric effect at each increment;

    **characterized by**:

    a particle generator (40) coupled to the ray marcher (34) and for generating a particle at each increment;

    in that the renderer is a particle renderer (44) coupled to the particle generator (40) and for rendering the particles; and by
    a splatterer (50) coupled to the particle renderer (44) and for splatting each particle multiple times along a direction defined by a velocity of the particle in the image plane to define the image of the volumetric effect.


**Patentansprüche**

1.  Verfahren zum Abbilden eines ein Volumen einnehmenden volumetrischen Effekts, welches folgende Schritte umfasst:

    Vorsehen von mehreren Bildelementen, um ein Bild des volumetrischen Effekts festzulegen;
    für jedes Bildelement Schicken eines Strahls (13, 15) von einem Beobachtungsstandort (12) durch jedes Bildelement;
    Bewegen durch das Volumen entlang jedes Strahls (13, 15) in Stufen; und
    Darstellen des volumetrischen Effekts an jeder Stufe;

**dadurch gekennzeichnet, dass** das Darstellen umfasst:

an jeder Stufe entlang des Strahls (13, 15) das Erzeugen eines Partikels; und
Werfen jedes Partikels auf der Bildebene mehrere Male entlang einer Richtung, die durch eine Geschwindigkeit des Partikels in der Bildebene festgelegt ist, um das Bild des volumetrischen Effekts festzulegen.

2. Verfahren nach Anspruch 1, **dadurch gekennzeichnet, dass** der Schritt des Erzeugens eines Partikels Interpolieren umfasst.

3. Verfahren nach Anspruch 2, **dadurch gekennzeichnet, dass** das Interpolieren nicht linear ist.

4. Verfahren nach Anspruch 2, **dadurch gekennzeichnet, dass** das Interpolieren das Verwenden von trilinearer, triquadratischer oder trikubischer Interpolation umfasst.

5. Verfahren nach einem der vorstehenden Ansprüche, **dadurch gekennzeichnet, dass** das Darstellen der Partikel einzeln oder in Sätzen erfolgt.

6. Verfahren nach einem der vorstehenden Ansprüche, **dadurch gekennzeichnet, dass** jeder Partikel auf einem Viereck der Größe eines der Bildelemente dargestellt wird.

7. Verfahren nach einem der vorstehenden Ansprüche, **dadurch gekennzeichnet, dass** jeder Partikel die Attribute Position, Farbe, Opazität und Geschwindigkeit aufweist.

8. Verfahren nach einem der vorstehenden Ansprüche, **dadurch gekennzeichnet, dass** der Beobachtungsstandort (12) der einer fiktiven Kamera ist, die das Bild aufnimmt.

9. Verfahren nach einem der vorstehenden Ansprüche, **dadurch gekennzeichnet, dass** der Schritt des Schickens des Strahls (13, 15) für jeden Strahl umfasst:

Ermitteln seines Eintritts- und Austrittspunkts für das Volumen; und
Anwenden einer inversen Transformation an dem Strahl (13, 15).

10. Verfahren nach einem der vorstehenden Ansprüche, **dadurch gekennzeichnet, dass** die Anzahl an Stufen für jeden Strahl (13, 15) in dem Bereich von 50 bis 450 liegt.

11. Verfahren nach einem der vorstehenden Ansprüche, **dadurch gekennzeichnet, dass** der Schritt des Werfens umfasst:

Gewichten jedes Partikels mit einer Proportion des zugeordneten Bildpunkts, der von dem geworfenen Partikel verdeckt wird.

12. Verfahren nach einem der vorstehenden Ansprüche, **dadurch gekennzeichnet, dass** der Schritt des Werfens das Projizieren eines Vektors, der die Geschwindigkeit des Partikels darstellt, auf die Bildebene umfasst, um dadurch Bewegungsunschärfe darzustellen.

13. Verfahren nach einem der vorstehenden Ansprüche, welches weiterhin das Wiederholen des Schritts des Werfens über einem Vektor umfasst, der durch die Geschwindigkeit des Partikels festgelegt ist, um Bewegungsunschärfe vorzusehen.

14. Verfahren nach einem der vorstehenden Ansprüche, welches weiterhin das Festsetzen einer Tiefe des Bildfelds umfasst.

15. Verfahren nach einem der vorstehenden Ansprüche, das ein computerimplementiertes Verfahren ist.

16. Computerprogramm, das Programmcodemittel zum Ausführen aller Schritte eines der Ansprüche 1 bis 15 umfasst, wenn das Programm auf einem Computer ausgeführt wird.

17. Vorrichtung, vorzugsweise computer-implementiert, zum Abbilden eines ein Volumen einnehmenden volumetrischen Effekts, welche umfasst:

einen Speicher zum Speichern mehrerer ein Bild festlegender Bildelemente;
einen Raycaster (30), der mit dem Speicher gekoppelt ist und zum Schicken eines Strahls (13, 15) für jedes Bildelement von einem Beobachtungsstandort (12) durch jedes Bildelement dient;
einen Raymarcher (34), der mit dem Raycaster (30) gekoppelt ist und zum Bewegen durch das Volumen entlang jedes Strahls (13, 15) in Stufen dient; und
einen Renderer (44) zum Darstellen des volumetrischen Effekts an jeder Stufe;
**gekennzeichnet:**

**durch** einen Partikelgenerator (40), der mit dem Raymarcher (34) gekoppelt ist und zum Erzeugen eines Partikels an jeder Stufe dient;
**dadurch**, dass der Renderer ein Partikelrenderer (44) ist, der mit dem Partikelgenerator (40) gekoppelt ist und zum Darstellen der Partikel dient; und durch
einen Splatterer (50), der mit dem Partikelrenderer (44) gekoppelt ist und zum Werfen jedes Partikels mehrere Male entlang einer Richtung dient, die durch eine Geschwindigkeit des Partikels in der Bildebene festgelegt ist, um das Bild des volumetrischen Effekts festzulegen.

**Revendications**

1. Procédé pour représenter un effet volumétrique occupant un volume, comprenant les étapes consistant à :

délivrer une pluralité d'éléments d'image afin de définir une image de l'effet volumétrique ;
pour chaque élément d'image, envoyer un rayon (13, 15) à partir d'un emplacement d'observation (12) à travers chaque élément d'image ;
effectuer un déplacement à travers le volume le long de chaque rayon (13, 15) par incréments ; et
rendre l'effet volumétrique à chaque incrément ;

**caractérisé en ce que** ledit rendu comprend :

à chaque incrément le long du rayon (13, 15), la génération d'une particule ; et
la projection de chaque particule sur le plan d'image de multiples fois le long d'une direction définie par une vitesse de la particule dans le plan d'image afin de définir l'image de l'effet volumétrique.

2. Procédé selon la revendication 1, dans lequel l'étape de génération d'une particule comprend une interpolation.

3. Procédé selon la revendication 2, dans lequel l'interpolation est non linéaire.

4. Procédé selon la revendication 2, dans lequel l'interpolation comprend l'application de l'une des interpolations trilinéaire, triquadratique et tricubique.

5. Procédé selon l'une quelconque des revendications précédentes, dans lequel le rendu des particules se fait individuellement ou par lots.

6. Procédé selon l'une quelconque des revendications précédentes, dans lequel chaque particule est rendue sur un quadrilatère de la taille de l'un des éléments d'image.

7. Procédé selon l'une quelconque des revendications précédentes, dans lequel chaque particule a des attributs de position, de couleur, d'opacité et de vitesse.

8. Procédé selon l'une quelconque des revendications précédentes, dans lequel l'emplacement d'observation (12) est celui d'une caméra fictive enregistrant l'image.

9. Procédé selon l'une quelconque des revendications précédentes, dans lequel l'étape d'envoi du rayon (13, 15) comprend, pour chaque rayon :

la détermination de ses points d'entrée et de sortie pour le volume ; et

l'application d'une transformation inverse au rayon (13, 15).

10. Procédé selon l'une quelconque des revendications précédentes, dans lequel le nombre d'incréments pour chaque rayon (13, 15) est situé dans la plage comprise entre 50 et 450.

11. Procédé selon l'une quelconque des revendications précédentes, dans lequel l'étape de projection comprend :

la pondération de chaque particule par une proportion du pixel associé couvert par la particule projetée.

12. Procédé selon l'une quelconque des revendications précédentes, dans lequel l'étape de projection comprend la projection d'un vecteur représentant la vitesse de la particule sur le plan d'image, de façon à rendre ainsi un flou de mouvement.

13. Procédé selon l'une quelconque des revendications précédentes, comprenant de plus la répétition de l'étape de projection sur un vecteur défini par la vitesse de la particule de façon à produire un flou de mouvement.

14. Procédé selon l'une quelconque des revendications précédentes, comprenant de plus la détermination d'une profondeur de champ de l'image.

15. Procédé selon l'une quelconque des revendications précédentes, étant un procédé mis en oeuvre par ordinateur.

16. Programme informatique, comprenant des moyens de codage de programme pour effectuer la totalité des étapes selon l'une quelconque des revendications 1 à 15 lorsque ledit programme est exécuté sur un ordinateur.

17. Appareil, de préférence mis en oeuvre par un ordinateur, pour représenter un effet volumétrique occupant un volume, comprenant :

une mémoire pour mémoriser une pluralité d'éléments d'image définissant une image ;
un dispositif d'envoi de rayons (30) couplé à la mémoire et servant à envoyer un rayon (13, 15) pour chaque élément d'image à partir d'un emplacement d'observation (12) à travers chaque élément d'image ;
un dispositif de marche de rayons (34) couplé au dispositif d'envoi de rayons (30) et servant à effectuer un déplacement à travers le volume le long de chaque rayon (13, 15) par incréments ; et
un dispositif de rendu (44) pour rendre l'effet volumétrique à chaque incrément ;

**caractérisé par** :

un générateur de particules (40) couplé au dispositif de marche de rayons (34) et servant à générer une particule à chaque incrément ;
le fait que le dispositif de rendu est un dispositif de rendu de particules (44) couplé au générateur de particules (40) et servant à rendre les particules ; et par :

un dispositif de projection (50) couplé au dispositif de rendu de particules (44) et servant à projeter chaque particule de multiples fois le long d'une direction définie par une vitesse de la particule dans le plan d'image de façon à définir l'image de l'effet volumétrique.

Fig. 1a

Fig. 1b

Fig. 2a

Fig. 2b

FIG. 3a

EP 1 953 701 B1

FIG. 3b

14

FIG. 3c

FIG. 3d

FIG. 4a

FIG. 4b

FIG. 5

FIG. 6a

FIG. 6b

Fig . 7

Fig 8

FIG. 9

EP 1 953 701 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1550984 A2

**Non-patent literature cited in the description**

- **William T. Reeves.** Particle systems - A Technique for modelling a class of fuzzy objects. *Acm Transactions on graphics,* April 1983, vol. 2 (2), 91-108
- **K. Mueller et al.** Splatting errors and Antialiasing. *IEEE Trans. on visualisation and computer graphics,* 1998, vol. 4 (2), 178-191
- **K. Mueller et al.** Fast Perspective Volume Rendering with splatting by utilizing a Ray-Driven Approach. *Proc. IEEE Visualisation Conf.,* 1996, 65-72